# EUROPEAN PATENT APPLICATION

(11) **EP 4 175 235 A1**
(43) Date of publication of application: **03.05.2023**
(21) Application number: 21834141.0
(22) Date of filing: 28.06.2021
(51) Int. Cl.: H04L 12/22

(54) **NETWORK ELEMENT MANAGEMENT METHOD, NETWORK MANAGEMENT SYSTEM, INDEPENDENT COMPUTING NODE, COMPUTER DEVICE, AND STORAGE MEDIUM**

(30) Priority: 28.06.2020 CN 202010598928
(71) Applicant: ZTE Corporation, Shenzhen, Guangdong 518057 (CN)
(72) Inventor: NI, Hua, Shenzhen, Guangdong 518057 (CN); DU, Yongsheng, Shenzhen, Guangdong 518057 (CN); YUE, Shubin, Shenzhen, Guangdong 518057 (CN)
(74) Representative: Canzler & Bergmeier Patentanwälte Partnerschaft mbB
(86) International application number: PCT/CN2021/102711
(87) International publication number: WO 2022/001941

(57) **Abstract**

Provided are a network element management method, a network management system, an independent computing node, a computer device, and a computer-readable medium, wherein the network element management method comprises: acquiring first network element data of each network element; determining a network element waiting to receive a model; training a model according to the first network element data; and issuing a model, which is obtained by means of training, to the network element waiting to receive a model. The network management system can intelligently manage a network element, the computing power of a base station is enhanced, and the intelligent operation and maintenance of the base station are realized.

## Description

### CROSS-REFERENCE TO RELATED APPLICATIONS

The present application claims the priority of Chinese Patent Application No.202010598928.X, filed on June 28, 2020, the contents of which are incorporated herein in their entirety by reference.

### TECHNICAL FIELD

The present disclosure relates to the field of edge computing technology, and in particular, to a network element management method, a network management system, an independent computing node, a computer device, and a computer-readable storage medium.

### BACKGROUND

The basic idea of introducing Mobile Edge Computing (MEC) by ETSI (European Telecommunications Standards Institute) is to migrate a cloud computing platform from the internal of a mobile core network to the edge of a mobile access network, thereby realizing flexible utilization of computing and storage resources. This concept deeply integrates the telecommunication cellular network with the internet service, aims to reduce the end-to-end time delay of mobile service delivery, and explores the inherent capacity of a wireless network, thereby improving user's experiences, bringing a brand new change to the operation mode of a telecommunication operator, and establishing a novel industrial chain and a network ecosystem. In 2016, ETSI extended the concept of MEC to Multi-Access Edge Computing, extending edge computing further from the telecommunication cellular network to other wireless access networks. The MEC may be considered as a cloud server running at the edge of the mobile network and running a specific task.

With the expansion of network intelligent capability, the requirement for real-time performance and intelligence are higher and higher, and it is also desirable that the base station itself is an intelligent node to realize the intelligent operation and maintenance of the base station. In order to realize intelligent operation and maintenance of the base station, it is very important for the base station to train a model according to the acquired real data, but this task is difficult to be completed because the computing power of the base station equipment is generally insufficient. Further, the network elements that have already provided services in the related network are limited by hardware resources and difficult to support model training.

### SUMMARY

In a first aspect, the present disclosure provides a network element management method, including: acquiring first network element data of each network element; determining a network element waiting to receive a model; training a model according to the first network element data; and issuing the model obtained by training to the network element waiting to receive a model.

In a second aspect, the present disclosure provides a network element management method, including: receiving a second training instruction transmitted by a network management system; acquiring first network element data of each network element; determining a network element waiting to receive a model; training a model according to the first network element data of each network element; issuing the model obtained by training to the network element waiting to receive a model; receiving second network element data returned by the network element waiting to receive a model, and iteratively optimizing the model according to the second network element data; and transmitting the iteratively optimized model to the network element waiting to receive a model.

In a third aspect, the present disclosure provides a network element management method, including: receiving a first training instruction transmitted by a network management system; receiving first network element data of each network element connected to an independent computing node; determining a network element waiting to receive a model; training a model according to the first network element data of each network element; and uploading the model obtained by training to the network management system.

In a fourth aspect, the present disclosure provides a network management system, including: an acquiring module, configured to acquire first network element data of each network element; a determining module, configured to determine a network element waiting to receive a model; a model training module, configured to train a model according to the first network element data; and a transmitting module, configured to issue the model obtained by training to the network element waiting to receive a model.

In a fifth aspect, the present disclosure provides an independent computing node, including: a receiving module, configured to receive a second training instruction transmitted by a network management system; an acquiring module, configured to acquire first network element data of each network element; a determining module, configured to determine a network element waiting to receive a model; a model training module, configured to train a model according to the first network element data of each network element; a transmitting module, configured to issue the model obtained by training to the network element waiting to receive a model, with the receiving module being further configured to receive second network element data returned by the network element waiting to receive a model; an optimization module, configured to iteratively optimize the model according to the second network element data, with the transmitting module being further configured to transmit the iteratively optimized model to the network element waiting to receive a model.

In a sixth aspect, the present disclosure provides an independent computing node, including: a receiving module, configured to receive a first training instruction transmitted by a network management system and receive first network element data of each network element connected to the independent computing node; a determining module, configured to determine a network element waiting to receive a model; a model training module, configured to train a model according to the first network element data of each network element; and a transmitting module, configured to upload the model obtained by training to the network management system.

In a seventh aspect, the present disclosure provides a computer device, including: at least one processor; a storage apparatus having at least one computer program stored thereon; the at least one computer program, when executed by the at least one processor, causes the at least one processor to implement the network element management method as described above.

In an eighth aspect, the present disclosure provides a computer-readable storage medium, storing a computer program thereon, the computer program, when executed by a processor, causes the processor to implement the network element management method as described above.

### DESCRIPTION OF DRAWINGS

Fig. 1 is a schematic structural diagram of a network topology of the present disclosure;
Fig. 2 is a flowchart of a network element management method of the present disclosure;
Fig. 3 is another flowchart of a network element management method of the present disclosure;
Fig. 4 is another flowchart of a network element management method of the present disclosure;
Fig. 5 is a schematic structural diagram of a network management system of the present disclosure;
Fig. 6 is a schematic structural diagram of an independent computing node of the present disclosure; and
Fig. 7 is another schematic structural diagram of an independent computing node of the present disclosure.

### DETAILED DESCRIPTION

In order to make a person skilled in the art better understand the present disclosure, the network element management method, the network management system, the independent computing node, the computer device, and the computer-readable storage medium provided in the present disclosure are described in detail below with reference to the drawings.

Exemplary implementations will be described fully hereinafter with reference to the drawings, but the implementations may be embodied in different forms and should not be construed as limited to those set forth herein. These implementations are provided so that the present disclosure will be thorough and complete, and will fully convey the scope of the present disclosure to a person skilled in the art.

The implementations of the present disclosure and features of the implementations may be combined with each other without conflict.

As used herein, the term "and/or" includes any and all combinations of at least one associated listed item.

The terminology used herein is for the purpose of describing particular implementations only and is not intended to be limiting of the present disclosure. As used herein, the singular forms "a", "an" and "the" are intended to include the plural forms as well, unless the context clearly indicates otherwise. It will be further understood that the terms "includes/comprises" and/or "including/comprising" if used in the specification, specify the presence of stated features, integers, steps, operations, elements, and/or components, but do not preclude the presence or addition of at least one other feature, integer, step, operation, element, component, and/or group thereof.

Unless otherwise defined, all terms (including technical and scientific terms) used herein have the same meaning as commonly understood by a person skilled in the art. It will be further understood that terms, such as the terms defined in commonly used dictionary, should be interpreted as having meanings consistent with their meanings in the context of the related art and the present disclosure, and will not be interpreted as having idealized or over formal meanings unless specifically defined herein.

The MEC provides various optimization algorithms of resources or service scheduling to assist the base station to complete resource allocation and service scheduling more effectively, but the optimization is completed by the MEC, and the MEC is not an intelligent node, limited by hardware resources, it is difficult to support model training, and therefore cannot obtain a machine learning model directly. Meanwhile, the base station is only an executor of the command and is not an intelligent node. It cannot solve the problem of insufficient arithmetic of the base station and difficulty in realizing intelligent operation and maintenance of the base station. In order to solve the above problem, the present disclosure provides a network element management method, a network management system, an independent computing node, a computer device, and a computer-readable medium.

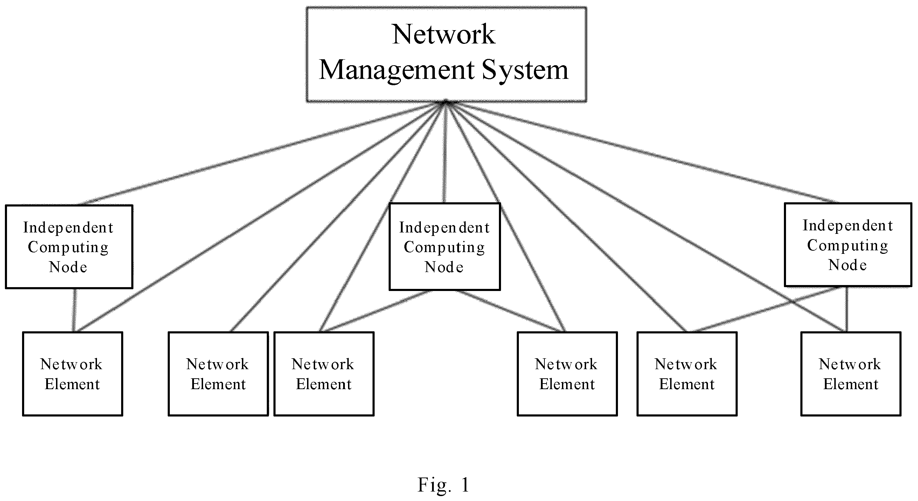

Fig. 1 shows a schematic structural diagram of a network topology of the present disclosure. An independent computing node may connect to a network management system, and the independent computing node interacts model information and data information with the network management system; each network management system may connect to a plurality of independent computing nodes. Each independent computing node may connect to a base station, and the independent computing node interacts model information and data information with the base station; each independent computing node may connect to a plurality of base stations. The base station may not connect to the independent computing node. The base station and the independent computing node may connect to the same network management system. Each independent computing node may connect to a plurality of network elements. The independent computing node here is carried by a MEC node.

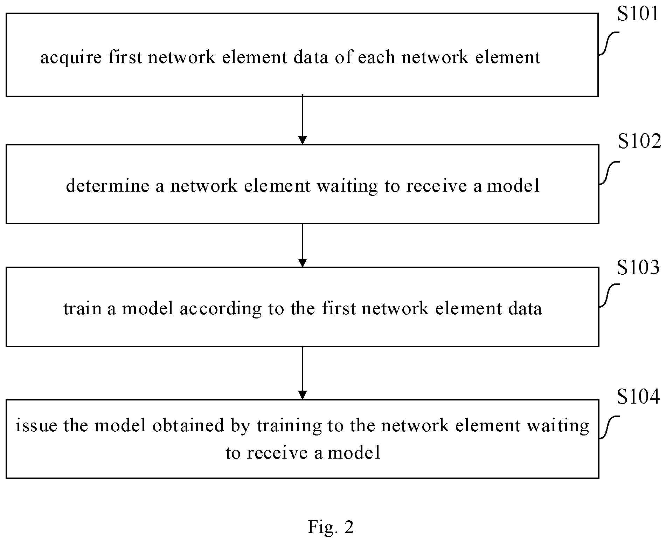

Fig. 2 shows a flowchart of a network element management method of the present disclosure. The network element management method may be applied to a network management system. As shown in Fig. 2, the network element management method in this implementation includes following steps S101 to S104.

At step S 101, acquiring first network element data of each network element.

The first network element data is network element data used for model training, and the first network element data is generally data collected in a relatively long period. The first network element data includes first type data and second type data. The first type data may include algorithm data and operation environment data of the network element. For example, the operation environment of the network element A is Java, and the pre-agreed algorithm of the network element A is algorithm b. The second type data may include a configuration parameter, an alarm parameter, a performance parameter, a signaling parameter, a measurement report parameter, and the like of the network element. The configuration parameter may include parameters such as a network element location, a format type, and a hardware capability. The performance parameter may include parameters such as a service type and a service volume.

In this step, the network management system acquires first network element data for model training to perform model training according to the first network element data, the first network element data may be data of one or more network elements. The first network element data may be data directly collected from each network element, or data imported from an external system.

At step S 102, determining a network element waiting to receive a model.

In this step, the network management system designates a specific network element waiting to receive a model, the specific network element receives the model, or any network element may be used as the network element waiting to receive a model.

At step S 103, training a model according to the first network element data.

In this step, the network management system trains a model according to the first network element data. The model may be divided into a plurality of types, but each network management system only trains one type of model, for example, one network management system may only trains the model of the type of parameters and rules. For each type of model, a plurality of divided sub-models may be trained according to the second type data, the divided sub-models are matched with network elements waiting to receive a model respectively.

At step S 104, issuing the model obtained by training to the network element waiting to receive a model.

In this step, the network management system issues the model obtained by training to the specific network element waiting to receive a model or any network element.

It should be noted that the model issued here may be an initial model, that is, only one model, corresponding to the type of model that is trained by the network management system, is issued to all network elements waiting to receive a model, then independent computing nodes connected to the network elements waiting to receive a model are used to perform iterative optimizations respectively, and each model subjected to the iterative optimization is transmitted to the corresponding network element waiting to receive a model.

In some implementations, the model issued by the network management system may be matched with the network element waiting to receive a model, that is, the model, correspondingly matched with the type of model trained by the network management system, is issued to the network element waiting to receive a model. After allocating a matched model for each network element waiting to receive a model, the iterative optimization may be then continuously performed on the model.

In the present disclosure, the network management system acquires the first network element data of each network element, determines a network element waiting to receive a model, trains a model according to the first network element data of each network element, and issues the model obtained by training to the network element waiting to receive a model, and the network element uses the model for inference. The network management system has a strong computing power, the independent computing node has a certain computing power, but the independent computing node is the network element and cannot support a large amount of computation, therefore, the model training is completed by the network management system. The present disclosure can realize intelligent management of the network element by the network management system, enhance the computing power of the base station and realize intelligent operation and maintenance of the base station.

Further, in some implementations, after training the model according to the first network element data (i.e., step S103), the network element management method further includes: determining an independent computing node connected to each network element waiting to receive a model, and issuing the model to the independent computing node.

The network management system determines an independent computing node deployed close to the base station, the independent computing node has a computing capacity and a data acquisition capacity, and can assist to provide a machine learning model of the base station and assist the base station to deploy intelligent operation and maintenance. The network management system issues the initial model to the independent computing node connected to the network element waiting to receive a model and the network element waiting to receive a model, respectively. The network element applies the initial model to infer during a service processing flow, generates second network element data (e.g., a model application result), and transmits the second network element data to the independent computing node connected to the network element waiting to receive a model. The independent computing node iteratively optimizes the initial model according to the second network element data and returns the iteratively optimized model to the network element waiting to receive a model. That is, the network management system adjusts the initial model according to the second network element data returned by each network element waiting to receive a model, and allocates a matched model for each network element waiting to receive a model.

The second network element data is generally data in a relatively short period or real time data, and is used for optimizing the model, and the iteratively optimized model generated by the independent computing node is a short term model or a real time model.

In some implementations, the model issued by the network management system to the network element waiting to receive a model and to the independent computing node connected to the network element waiting to receive a model, may be matched with the network element waiting to receive a model, that is, the model that is correspondingly matched with the type of model trained by the network management system is issued. After allocating a matched model for each network element waiting to receive a model, and the iterative optimization may be then continuously performed on the basis of the matched model, the specific step of the iterative optimization is the same as that of the iterative optimization in a case where the network management system issues the initial model, and the detailed description is omitted here.

In the present disclosure, the model training is completed by the network management system, the network management system issues the trained model to the network element, the network element uses the model for inference, the second network element data generated by the network element applying the model is transmitted to the independent computing node, and the independent computing node completes the iterative optimization of the model. Therefore, the present disclosure can realize intelligent management of the network element by the network management system assisted by the independent computing node, enhance the computing power of the base station and realize the intelligent operation and maintenance of the base station.

Further, in some implementations, after training the model according to the first network element data (i.e., step S 103), the network element management method further includes: selecting a plurality of independent computing nodes, and transmitting a first training instruction to each selected independent computing node; receiving a model returned by each independent computing node; and iteratively optimizing the model according to the first network element data, and issuing the iteratively optimized model to the network element waiting to receive a model.

The first training instruction is an instruction transmitted to the independent computing node by the network management system for federal learning. The model returned by each independent computing node is obtained by training, through each independent computing node, according to the received first training instruction.

The independent computing node may also perform a model training, under the scenario that the independent computing node performs the model training, there is an expectation for protection of data privacy, the data for the model training may be reported to the independent computing node by the network element, but the computing power of each single independent computing node is limited, unable to complete the model training. Therefore, the network management system selects a plurality of independent computing nodes to perform federal learning, each independent computing node performs the model training with part of sample data, finally, the network management system receives and combines models trained by the independent computing nodes, and iteratively optimizes the combined model according to the first network element data to generate the final model.

Further, in some implementations, the determining a network element waiting to receive a model (i.e., step S102) includes: determining the network element waiting to receive a model according to the first type data of the network management system, the first type data of the first network element data and the type of model that can be trained by the network management system.

The network management system designates a specific network element waiting to receive a model, to receive the model. A first type of model includes parameters and rules, a second type of model includes a function or an executable package under a fixed operation environment, and a third type of the model includes a model container. The network management system may determine the type of model which can be trained by the network management system in advance according to hardware conditions of the network management system. The network management system determines whether the network element is matched with the type of model which can be trained by the network management system according to the algorithm data and the operation environment data of the network management system, the first type data of the first network element data and the type of model which can be trained by the network management system, if it is determined that the network element is matched with the type of model which can be trained by the network management system, the network element is determined as the network element waiting to receive a model, and the model trained may be issued to the network element. If the network element is not matched with the type of model that can be trained by the network management system, the model trained is not issued to the network element.

Correspondingly, the training the model according to the first network element data (step S103) includes: training the model according to the second type data of the first network element data.

In this step, the model is trained based on the second type data of the first network element data, i.e., the model is trained based on the second type data of all network elements, and the trained model may be matched with only part of the network elements. For example, the network management system obtains the first network element data of one hundred network elements, and the trained model is matched with ten network elements.

The network management system trains the model according to a configuration parameter, an alarm parameter, a performance parameter, a signaling parameter, a measurement report parameter and the like of the network element in the first network element data. For example, if the type of model includes parameters and rules, the specific parameters and rules are trained according to a configuration parameter, an alarm parameter, a performance parameter, a signaling parameter, a measurement report parameter, and the like of the network element, that is, the model is obtained. Each second type data has different dimensions, and classifying may be performed based on different dimensions of the second type data, and how to classify according to the second type data is not limited here, and may be set as desired.

It should be noted that the model trained herein is a training result trained in a relatively long period based on the data of the network element in a relatively long period.

Accordingly, in some implementations, after issuing the model obtained by training to the network element waiting to receive a model (i.e., step S 104), the network element management method further includes: receiving a model applying request transmitted by the network element; and if the first type data in the model applying request is matched with the first type data of the network management system, determining the model corresponding to the second type data in the model applying request, and transmitting the determined model to the network element. The model applying request includes the first type data and the second type data of the network element.

The network management system receives the model applying request transmitted by the network element, and if the first type data of the model applying request is matched with the first type data of the network management system, it indicates that the network element can receive the model of the corresponding type issued by the network management system. For example, the network management system may only train the model of the type of parameters and rules, and the network element can receive the model of the type of parameters and rules. The network management system filters out the matched model according to the second type data of the model applying request and transmits the determined model to the network element. For example, if the network management system may only train the model of the type of parameters and rules, and network element locations in configuration parameters of different second type data are different, and models of the type of parameters and rules are accordingly different, the network element location in a downtown area corresponds to one model of the type of parameters and rules, and the network element location in a suburban area corresponds to another model of the type of parameters and rules, a corresponding model is matched according to the network element location of the model applying request.

Further, in some implementations, after issuing the model obtained by training to the network element waiting to receive a model (i.e., step S 104), the network element management method further includes: transmitting the model to another network management system for training the same type of model.

The trained model may be shared among different network management systems. On one hand, it can realize the rapid deployment and optimization of the intelligence of the network element, and on the other hand, it can also solve the problem that model training cannot be carried out due to the difficulty of data collection.

For example, the network management system 1 stores the model used in the networking of the present network and information related to the model. The information related to the model may include: a function, a model list, model detailed information, a model iteration record, or the like. The network management system 1 may share the locally stored model and the information related to the model to the network management system 2. It should be noted that the network management system 1 and the network management system 2 are used for training the same type of model, for example, both of them are used for training the model of the type of parameters and rules. Because the network management systems sharing the model are used for training the same type of model, the model can be conveniently issued to the network element for model application. The sharing process may include a file export process and a file import process, and may also be an interface message interaction process, and may be realized through an online interaction process or an offline operation interface. The network management system 2 obtains the model of the network management system 1 and the information related to the model, and may directly distribute the model as the initial model (e.g., the model, corresponding to the type of model which can be trained by the network management system, issued to all the network elements waiting to receive a model) to the network element, waiting to receive a model, managed by the network management system and the independent computing node connected to the network element waiting to receive a model.

The model training of machine learning expects to collect a large amount of data, such as a configuration, an alarm, a performance, a signaling, a measurement report, etc., and the collection of the data consumes a lot of resources, such as network elements, transmission, etc., so that the cost of the collection is relatively high, and the cost of calculating the model is relatively high. In addition, the expectation of data security is higher and higher, and the data security policies in different regions are different, so it may not be allowed to collect data directly to the network management system for model training. In the present disclosure, the model contains a weight of an important characteristic value, the trained model may be shared among different network management systems, and if the model is applied to another network management system, the model is retrained according to the adjustment of the weight of the important characteristic value. Data of different network management systems may be synthesized, for quickly selecting the model, realizing quick deployment and iterative update of the model, thereby reducing the cost of intelligent operation and maintenance of the base station, and solving the problem of difficulty and insecurity of collection of original data during the model training of machine learning.

Further, in some implementations, the network element management method may further include: receiving a model transmitted by another network management system; iteratively optimizing the model according to the first network element data stored in the network management system; and issuing the iteratively optimized model to the network element waiting to receive a model.

For example, the network management system 1 shares the model with the network management system 2, and the network management system 2 using the first network element data of the local network management system, according to the model shared by the network management system 1, performs an iterative optimization, readjusts parameters, and the like to generate an iteratively optimized model, and distributes the iteratively optimized model to the network element, waiting to receive a model, managed by the local network management system and the independent computing node connected to the network element waiting to receive a model.

It should be noted that the iteratively optimized model issued by the network management system here may be one type or multiple types, that is, one model may be issued to all network elements, waiting to receive a model, managed by the network management system, or matched models may be respectively issued to the network elements, waiting to receive a model, managed by the network management system.

Further, in some implementations, the first type data includes algorithm data and execution environment data, the first type of model includes parameters and rules, the second type of model includes a function or an executable package in a fixed operation environment, and the third type of model includes a model container. The trained model may be embodied in different forms in different scenarios, and the models in different forms have different convenience and expandability, so as to meet the requirements of various scenarios.

The determining a network element waiting to receive a model according to the first type data of the network management system, the first type data of the first network element data, and the type of model that can be trained by the network management system (i.e., step S102), includes: if the type of model which can be trained by the network management system includes parameters and rules, determining that the network element, which has the same operation environment data as the network management system and has an algorithm pre-agreed by the network management system, is the network element waiting to receive a model; if the type of model which can be trained by the network management system is a function or an executable packet in a fixed operation environment, determining that the network element, which has the same operation environment data as the network management system and does not have an algorithm pre-agreed by the network management system, is the network element waiting to receive a model; if the type of model which can be trained by the network management system is a model container, determining that the network element, which has operation environment data different from that of the network management system and does not have an algorithm pre-agreed by the network management system, is the network element waiting to receive a model; the algorithm is determined from the algorithm data.

Each network management system can only train one type of model. In a case where the type of model trained by the network management system includes parameters and rules, according to the operation environment data and the algorithm data, if the network management system and the network element for model interaction have the same operation environment and an algorithm is pre-agreed by them, the network element is determined to be the network element waiting to receive a model.

In a case where the type of model trained by the network management system is a function or an executable packet in a fixed operation environment, according to the operation environment data and the algorithm data, if the network management system and the network element for model interaction have the same operation environment but no algorithm is pre-agreed by them, the network element is determined to be the network element waiting to receive a model.

In a case where the type of model trained by the network management system is a model container, according to the operation environment data and the algorithm data, if the network management system and the network element for model interaction do not have the same operation environment and no algorithm is pre-agreed by them, the network element is determined to be the network element waiting to receive a model.

In some implementations, after the network element and the independent computing node receive the model, whether the model can be used may be further determined, if the model can be used, the model is used, and if the model cannot be used, the model is discarded. For example, the network element or the independent computing node receives a model of a type of parameters and rules, and if the model of the type of parameters and rules is matched with the operation environment of the network element and the applied algorithm of the model is the same as that of the network element, the model may be applied. If the network element or the independent computing node receives a model of a type of a function or an executable package in a fixed operation environment, and the model of the type of the function or the executable package in the fixed operation environment is matched with the operation environment of the network element, the model may be applied. The model may be applied if the network element or the independent computing node receives a model of a type of a model container.

In some implementations, each network management system may train multiple types of models. A first type of model includes parameters and rules, a second type of model includes a function or an executable package of a fixed execution environment, and a third type of model includes a model container. The steps of the network management system training multiple types of models and the independent computing node correspondingly optimizing the multiple types of models are the same as the steps for the network management system training one type of model and the independent computing node optimizing the one type of model, and thus are implemented with reference to the above implementations, which are not limited herein.

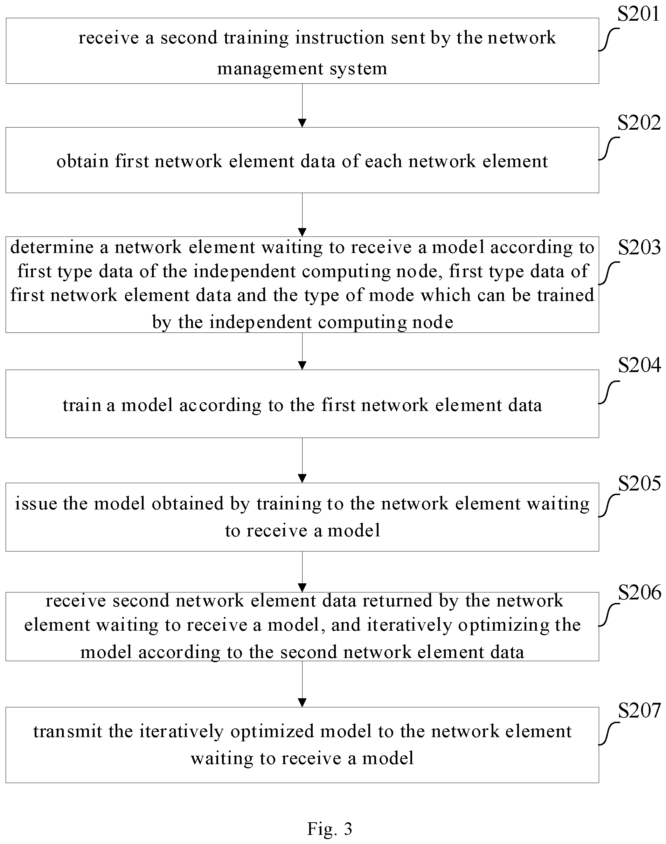

Fig. 3 shows another flowchart of a network element management method provided in the present disclosure. The network element management method may be applied to the independent computing node. As shown in Fig. 3, the network element management method provided in this implementation includes following steps S201 to S207.

At step S201, receiving a second training instruction sent by the network management system.

The second training instruction is an instruction used by the network management system for designating the independent computing node to provide intelligent operation and maintenance capability support for the specific network element.

In this step, the independent computing node receives the second training instruction transmitted by the network management system, so as to perform a model training and a model optimization. In the implementation corresponding to Fig. 2, the step of training the model is completed by the network management system, the step of iteratively optimizing the model is completed by each independent computing node, and the steps of training the model and iteratively optimizing the model in this implementation are completed by the independent computing node.

At step S202, obtaining first network element data of each network element.

The first network element data includes first type data and second type data, and the first network element data is generally data collected in a relatively long period. The first type data includes algorithm data and operation environment data of the network element. For example, the operation environment of the network element A is Java, and the pre-agreed algorithm of the network element A is algorithm b. The second type data includes a configuration parameter, an alarm parameter, a performance parameter, a signaling parameter, a measurement report parameter, and the like of the network element, the configuration parameter may include parameters such as a network element location, a format type, and a hardware capability, and the performance parameter may include parameters such as a service type and a service volume.

In this step, the independent computing node obtains first network element data for model training, which may be data of one or more network elements, so as to perform model training according to the first network element data. The specific first network element data may be data directly collected from each network element, or data imported from an external system.

At step S203, determining a network element waiting to receive a model.

In this step, the independent computing node designates a specific network element waiting to receive a model in order to receive the model, or may designate any network element as the network element waiting to receive a model. The specific implementation is the same as that corresponding to Fig. 2, and reference may be made to the above-described implementation.

At step S204, training a model according to the first network element data of each network element.

In this step, the independent computing node trains a model according to the first network element data. The model may be divided into multiple types, but the independent computing node trains only one type of model, e.g., only the type of parameters and rules. Under each type of model, a plurality of divided sub-models may be trained according to the second type data, and the plurality of divided sub-models are matched with the network elements waiting to receive a model respectively. The specific implementation is the same as that corresponding to Fig. 2, and reference may be made to the above-described implementation.

It should be noted that the model trained herein is a training result trained in a relatively long period based on the data of the network element in a relatively long period.

At step S205, transmitting the model obtained by training to the network element waiting to receive a model.

In this step, the independent computing node issues the model obtained by training to a specific network element or any network element waiting to receive a model.

It should be noted that the model issued here may be an initial model, that is, only the model corresponding to the type of model that can be trained by the independent computing node is issued to all the network elements waiting to receive a model, then the independent computing node connected to each network element waiting to receive a model performs an iterative optimization respectively, and the model subjected to the iterative optimization is transmitted to the corresponding network element waiting to receive a model.

In some implementations, the model issued by the independent computing node may also be matched with the network element waiting to receive a model, that is, the model that is correspondingly matched with the type of model that can be trained by the independent computing node is issued to the network element waiting to receive a model. After allocating a matched model for each network element waiting to receive a model, and the iterative optimization may be then continuously performed on the model.

At step S206, receiving second network element data returned by the network element waiting to receive a model, and iteratively optimizing the model according to the second network element data.

At step S207, transmitting the iteratively optimized model to the network element waiting to receive a model.

In steps S206 to S207, the network element waiting to receive a model receives the initial model to perform inference and applies the initial model during the service processing flow, generates second network element data (i.e., a model application result), and returns the second network element data to the independent computing node connected to the network element waiting to receive a model. The independent computing node iteratively optimizes the initial model according to the second network element data, and returns the iteratively optimized model to the network element waiting to receive a model. That is, the initial model is adjusted according to the second network element data returned by each network element waiting to receive a model, and a matched model is allocated for each network element waiting to receive a model.

In the present disclosure, partial of independent computing nodes in the network have strong capabilities, and the independent computing nodes may directly complete the model training and the iterative optimization. In this case, the data transmission process is shorter, on one hand, it can reduce the resource consumption of data transmission, and on the other hand, it can effectively improve the real time performance of intelligent processing. Meanwhile, since each independent computing node collects data of corresponding network elements at the edge, it can also solve the problem of difficulty and insecurity of collection of raw data during the model training of machine learning.

In some implementations, a model, matched with the network element waiting to receive a model, is allocated for each network element waiting to receive a model, and then an iterative optimization is performed on the basis of the matched model, the specific step of the iterative optimization is the same as the step of the iterative optimization in a case where the independent computing node issues the initial model, and details thereof are not described here.

In some implementations, after the network element and the independent computing node receive the model, whether the model can be used may be further determined, if the model can be used, the model is used, and if the model cannot be used, the model is discarded. The specific implementation is the same as that corresponding to Fig. 2, and reference may be made to the above-described implementation.

In some implementations, each independent computing node may train and optimize multiple types of models. A first type of model includes parameters and rules, a second type of model includes a function or an executable package of a fixed execution environment, and a third type of the model includes a model container. The steps of training and optimizing multiple types of models by the independent computing node are the same as the steps of training and optimizing one type of the model by the independent computing node, and are specifically implemented with reference to the steps of the above implementations, which are not limited herein.

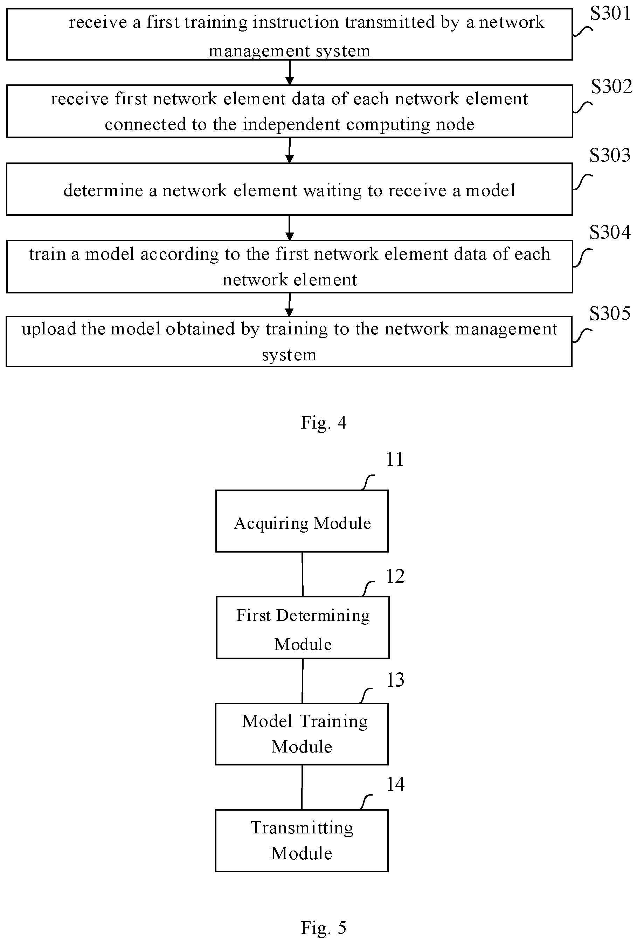

Fig. 4 shows another flowchart of a network element management method provided in the present disclosure. The network element management method may be applied to an independent computing node. As shown in Fig. 4, the network element management method provided in this implementation includes following steps S301 to S305.

At step S301, receiving a first training instruction transmitted by a network management system.

The first training instruction is an instruction which is transmitted to the independent computing node by the network management system for federal learning.

In some implementations, on the basis of the implementation corresponding to Fig. 3, there is an expectation for protection of data privacy, and the data for the model training may be reported to the independent computing node only by the network element, but the computation power of each single independent computing node is also limited, unable to complete the model training. Therefore, the network management system selects a plurality of independent computing nodes to conduct federal learning, each independent computing node performs the model training with part of sample data, and finally the network management system receives and combines results of the model training completed by the independent computing nodes to generate a final model. In this step, each independent computing node for federal learning receives the first training instruction transmitted by the network management system.

At step S302, receiving first network element data of each network element connected to the independent computing node.

The first network element data includes first type data and second type data, and the first network element data is generally data collected in a relatively long period. The first type data includes algorithm data and operation environment data of the network element. For example, the operation environment of the network element A is Java, and the pre-agreed algorithm of the network element A is algorithm b. The second type data includes a configuration parameter, an alarm parameter, a performance parameter, a signaling parameter, a measurement report parameter, and the like of the network element, the configuration parameter may include parameters such as a network element location, a format type, and a hardware capability, and the performance parameter may include parameters such as a service type and a service volume.

In this step, the independent computing node performing the federal learning receives the first network element data of each network element connected to the independent computing node, that is, each independent computing node receives sample data of part of network elements, but in the implementation corresponding to Fig. 3, the independent computing node obtains the sample data of all network elements.

At step S303, determining a network element waiting to receive a model.

In this step, the independent computing node designates a specific network element waiting to receive a model in order to receive the model, or may designate any one network element as the network element waiting to receive a model. The specific implementation is the same as the implementations corresponding to Fig. 2 and Fig. 3, and reference may be made to the above implementations.

At step S304, training a model according to the first network element data of each network element.

In this step, the independent computing node trains the model according to the first network element data. The model may be divided into multiple types, but each independent computing node trains only one type of model, e.g., only the model of the type of parameters and rules. Under each type of model, a plurality of divided sub-models may be trained according to the second type data, and the plurality of divided sub-models are matched with the network elements waiting to receive a model respectively. The specific implementation is the same as the implementations corresponding to Fig. 2 and Fig. 3, and reference may be made to the above implementations.

It should be noted that the model trained herein is a training result trained in a relatively long period based on the data of the network element in a relatively long period.

At step S305, uploading the model obtained by training to the network management system.

In this step, the independent computing node for federal learning uploads the trained model to the network management system, so that the network management system collects and combines the models trained by the independent computing nodes performing the federal learning, and performs iteratively optimization to generate the final model. The network management system distributes the trained model to the network element waiting to receive a model, which is determined by the independent computing node, and the network element uses the model to perform inference and applies the model in the service processing flow.

It should be noted that the models trained by the independent computing nodes performing federal learning should be the same type of models, therefore, the model generated by the network management system is one type of model. The model issued by the network management system to the network element may be the initial model, that is, only one model is issued to all the network elements waiting to receive a model, and the corresponding independent computing nodes iteratively optimize the models respectively, and transmit the iteratively optimized model to the corresponding network elements waiting to receive a model.

In some implementations, the model issued by the network management system to the network element may also be matched with the network element waiting to receive a model, and the second type data is different for the network elements waiting to receive a model, so that the models trained according to different second type data are also different. After allocating a matched model for each network element waiting to receive a model, and iterative optimization may be then continuously performed on the model.

In the present disclosure, in a scenario in which all network element data for model training is reported only by the network element to one independent computing node, and the problem of protection of data privacy exists, and the computing power of each single independent computing node is limited, unable to complete the model training. Thus, the model training may be completed by federal learning through scheduling of network management system, the network management system selects a plurality of independent computing nodes to perform federal learning, each independent computing node performs the model training with part of sample data, and finally the network management system receives and combines the results of the model training completed by the independent computing nodes and generates a final model, thereby realizing the rapid deployment and the iterative updating of the model, and reducing the cost of intelligent operation and maintenance of the base station. Meanwhile, the independent computing nodes collect the data of the corresponding network elements at the edge respectively, it can also solve the problem of difficulty and insecurity of collection of raw data during the model training of machine learning.

In some implementations, after the network element and the independent computing node receive the model, whether the model can be used may be further determined, if the model can be used, the model is used, and if the model cannot be used, the model is discarded. The specific implementation is the same as the implementations corresponding to Fig. 2 and Fig. 3, and reference may be made to the above implementations.

In some implementations, each independent computing node that performs federal learning may train multiple types of models. A first type of model includes parameters and rules, a second type of model includes a function or an executable package of a fixed execution environment, and a third type of model includes a model container. The steps of training and optimizing multiple types of models by the independent computing node are the same as the steps of training and optimizing one type of model by the independent computing node, and are specifically implemented with reference to the above implementations, which are not limited herein.

Fig. 5 shows a schematic structural diagram of a network management system provided in the present disclosure. Based on the same technical concept as the implementation corresponding to Fig. 2, as shown in Fig. 5, the network management system provided by the present disclosure includes: an acquiring module 11, configured to acquire first network element data of each network element; a first determining module 12, configured to determine a network element waiting to receive a model; a model training module 13, configured to train a model according to the first network element data; and a transmitting module 14, configured to transmit the model obtained by training to the network element waiting to receive a model.

In some implementations, the network management system further includes a second determining module, configured to determine an independent computing node connected to each network element waiting to receive a model, the transmitting module 14 is further configured to issue the model to the independent computing node.

In some implementations, the network management system further includes: a selection module, configured to select a plurality of independent computing nodes, the transmitting module 14 being further configured to transmit a first training instruction to each selected independent computing node and issue the iteratively optimized model to the network element waiting to receive a model; a receiving module, configured to receive models returned by the independent computing nodes, the models returned by the independent computing nodes being obtained by training, through the independent computing nodes, according to the received first training instruction; and an optimization module, configured to iteratively optimize the model according to the first network element data.

In some implementations, the first network element data has first type data and second type data; the first determining module 12 is specifically configured to determine the network element waiting to receive a model according to the first type data in the network management system, the first type data of the first network element data and the type of the model which can be trained by the network management system; and the model training module 13 is specifically configured to train a model according to the second type data of the first network element data.

In some implementations, the receiving module is further configured to receive a model applying request transmitted by the network element, and the model applying request includes first type data and second type data of the network element, and the network management system further includes: a second determining module, configured to, if the first type data in the model applying request is matched with the first type data of the network management system, determine a model corresponding to the second type data in the model applying request and transmit the determined model to the network element.

In some implementations, the transmitting module 14 is further configured to transmit the model to another network management system for training the same type of model.

In some implementations, the receiving module is further configured to receive a model transmitted by another network management system, and the network management system further includes an optimization module, configured to iteratively optimize the model according to the first network element data stored in the present network management system, and the transmitting module 14 is further configured to issue the iteratively optimized model to the network element waiting to receive a model.

In some implementations, the first type data includes algorithm data and operation environment data, a first type of model includes parameters and rules, a second type of model includes a function or an executable package of a fixed runtime environment, a third type of model includes a model container, the first determining module 12 is specifically configured to: if the type of model which can be trained by the network management system includes parameters and rules, determine that the network element, which has the same operation environment data as the network management system and has an algorithm pre-agreed by the network management system, is the network element waiting to receive a model; if the type of model which can be trained by the network management system is a function or an executable packet of a fixed operation environment, determine that the network element, which has the same operation environment data as the network management system and does not have an algorithm pre-agreed by the network management system, is the network element waiting to receive a model; and if the type of model which can be trained by the network management system is a model container, determine that the network element, which has operation environment data different from that of the network management system and does not have an algorithm pre-agreed by the network management system, is the network element waiting to receive a model.

The algorithm is determined according to algorithm data.

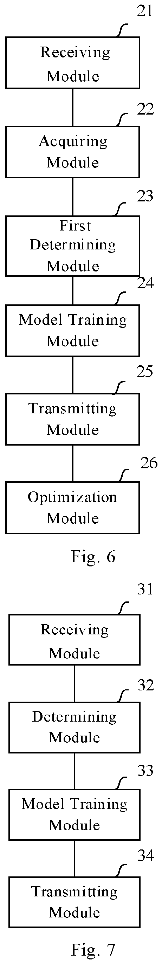

Fig. 6 shows a schematic structural diagram of an independent computing node provided in the present disclosure. Based on the same technical concept as the implementation corresponding to Fig. 3, as shown in Fig. 6, the independent computing node provided by the present disclosure includes: a receiving module 21, configured to receive a second training instruction transmitted by the network management system; an acquiring module 22, configured to acquire first network element data of each network element; a first determining module 23, configured to determine a network element waiting to receive a model; a model training module 24, configured to train a model according to the first network element data of each network element; a transmitting module 25, configured to issue the model obtained by training to the network element waiting to receive a model, the receiving module 21 being further configured to receive second network element data returned by the network element waiting to receive a model; and an optimization module 26, configured to iteratively optimize the model based on the second network element data, the transmitting module 25 being further configured to issue the iteratively optimized model to the network element waiting to receive a model.

Fig. 7 shows another structural diagram of an independent computing node provided in the present disclosure. Based on the same technical concept as the implementation corresponding to Fig. 4, as shown in Fig. 7, the independent computing node provided by the present disclosure includes: a receiving module 31, configured to receive a first training instruction transmitted by a network management system; receiving first network element data of each network element connected to the independent computing node; a determining module 32, configured to determine a network element waiting to receive a model; a model training module 33, configured to train a model according to the first network element data of each network element; and a transmitting module 34, configured to upload the model obtained by training to the network management system.

The present disclosure further provides a computer device, including: at least one processor and a storage apparatus, the storage apparatus having at least one computer program stored thereon; the at least one computer program, when executed by the at least one processor, causes the at least one processor to implement the network element management method provided in each of the foregoing implementations.

The present disclosure further provides a computer-readable storage medium, storing a computer program thereon, the computer program, when executed by a processor, causes the processor to implement the network element management method provided in each of the foregoing implementations.

It will be understood by a person of ordinary skill in the art that all or some of the steps of the method, functional modules/units in the device, disclosed above may be implemented as software, firmware, hardware, and suitable combinations thereof. In a hardware implementation, the division between functional modules/units mentioned in the above description does not necessarily correspond to the division of physical components; for example, each physical component may have multiple functions, or each function or step may be performed by several physical components in cooperation. Some or all of the physical components may be implemented as software executed by a processor, such as a central processing unit, digital signal processor, or microprocessor, or may be implemented as hardware, or an integrated circuit, such as an application specific integrated circuit. Such software may be distributed on computer-readable medium, which may include computer storage medium (or non-transitory medium) and communication medium (or transitory medium). The term computer storage medium includes volatile and nonvolatile, removable and non-removable medium implemented in any method or technology for storage of information such as computer-readable instructions, data structures, program modules or other data, as is well known to a person skilled in the art. The computer storage medium includes, but is not limited to, RAM, ROM, EEPROM, flash memory or other memory technology, CD-ROM, Digital Versatile Disks (DVD) or other optical disk storage, magnetic cassettes, magnetic tape, magnetic disk storage or other magnetic storage devices, or any other medium which can be used to store the desired information and which can accessed by a computer. In addition, the communication medium typically includes a computer-readable instruction, a data structure, a program module or other data in a modulated data signal such as a carrier wave or other transport mechanism and includes any information delivery medium as is well known to a person skilled in the art.

Example implementations have been disclosed herein, and although specific terms are employed, they are used and should be interpreted in a generic and descriptive sense only but not for purposes of limitation. In some instances, features, characteristics and/or elements described in connection with a particular implementation may be used alone, or may be used in combination with features, characteristics and/or elements described in connection with other implementations, unless expressly stated otherwise, as would be apparent to a person skilled in the art. It will, therefore, be understood by a person skilled in the art that various changes in form and details may be made without departing from the scope of the present disclosure as set forth in the appended claims.

## Claims

1. A network element management method, comprising:
acquiring first network element data of each network element;
determining a network element waiting to receive a model;
training a model according to the first network element data; and
issuing the model obtained by training to the network element waiting to receive a model.

2. The method of claim 1, further comprising:
after training the model according to the first network element data, determining an independent computing node connected to each network element waiting to receive a model; and
issuing the model to the independent computing node.

3. The method of claim 1, further comprising:
after training the model according to the first network element data, selecting a plurality of independent computing nodes, and transmitting a first training instruction to each selected independent computing node;
receiving a model returned by the independent computing node, the model being obtained by training, through the independent computing node, according to the received first training instruction; and
iteratively optimizing the model according to the first network element data, and issuing the iteratively optimized model to the network element waiting to receive a model.

4. The method of claim 1, wherein the first network element data has first type data and second type data; the determining a network element waiting to receive a model comprises: determining the network element waiting to receive a model according to first type data of the network management system, the first type data of the first network element data and a type of model to be trained by the network management system; and
the training a model according to the first network element data comprises:
training the model according to the second type data of the first network element data.

5. The method of claim 4, further comprising:
after issuing the model obtained by training to the network element waiting to receive a model, receiving a model applying request transmitted by the network element, the model applying request comprising first type data and second type data of the network element; and
in response to that the first type data in the model applying request is matched with the first type data of the network management system, determining a model corresponding to the second type data in the model applying request, and transmitting the determined model to the network element.

6. The method of claim 1, further comprising:
after issuing the model obtained by training to the network element waiting to receive a model, transmitting the model to another network management system for training the same type of model.

7. The method of claim 6, further comprising:
receiving a model transmitted by another network management system;
iteratively optimizing the model according to the first network element data stored in the network management system; and
issuing the iteratively optimized model to the network element waiting to receive a model.

8. The method of claim 4 or 5, wherein the first type data comprises algorithm data and operation environment data, a first type of model comprises parameters and rules, a second type of model comprises a function or an executable package of a fixed runtime environment, and a third type of model comprises a model container;
the determining the network element waiting to receive a model according to the first type data of the network management system, the first type data of the first network element data and the type of model to be trained by the network management system, comprises:
in response to that the type of model to be trained by the network management system includes parameters and rules, determining a network element, which has the same operation environment data as the network management system and has an algorithm pre-agreed by the network management system, is the network element waiting to receive a model;
in response to that the type of model to be trained by the network management system is a function or an executable packet of a fixed operation environment, determining a network element, which has the same operation environment data as the network management system and does not have an algorithm pre-agreed by the network management system, is the network element waiting to receive a model;
in response to that the type of model to be trained by the network management system is a model container, determining a network element, which has operation environment data different from that of the network management system and does not have an algorithm pre-agreed by the network management system, is the network element waiting to receive a model;
wherein the algorithm is determined from algorithm data.

9. A network element management method, comprising:
receiving a second training instruction transmitted by a network management system;
acquiring first network element data of each network element;
determining a network element waiting to receive a model;
training a model according to the first network element data of each network element;
issuing the model obtained by training to the network element waiting to receive a model;
receiving second network element data returned by the network element waiting to receive a model, and iteratively optimizing the model according to the second network element data; and
transmitting the iteratively optimized model to the network element waiting to receive a model.

10. A network element management method, comprising:
receiving a first training instruction transmitted by a network management system;
receiving first network element data of each network element connected to an independent computing node;
determining a network element waiting to receive a model;
training a model according to the first network element data of each network element; and
uploading the model obtained by training to the network management system.

11. A network management system, comprising:
an acquiring module, configured to acquire first network element data of each network element;
a determining module, configured to determine a network element waiting to receive a model;
a model training module, configured to train a model according to the first network element data; and
a transmitting module, configured to issue the model obtained by training to the network element waiting to receive a model.

12. An independent computing node, comprising:
a receiving module, configured to receive a second training instruction transmitted by a network management system;
an acquiring module, configured to acquire first network element data of each network element;
a determining module, configured to determine a network element waiting to receive a model;
a model training module, configured to train a model according to the first network element data of each network element;
a transmitting module, configured to issue the model obtained by training to the network element waiting to receive a model, the receiving module being further configured to receive second network element data returned by the network element waiting to receive a model; and
an optimization module, configured to iteratively optimize the model according to the second network element data, the transmitting module being further configured to transmit the iteratively optimized model to the network element waiting to receive a model.

13. An independent computing node, comprising:
a receiving module, configured to receive a first training instruction transmitted by a network management system and receive first network element data of each network element connected to the independent computing node;
a determining module, configured to determine a network element waiting to receive a model;
a model training module, configured to train a model according to the first network element data of each network element; and
a transmitting module, configured to upload the model obtained by training to the network management system.

14. A computer device, comprising:
at least one processor;
a storage apparatus having at least one computer program stored thereon;
the at least one computer program, when executed by the at least one processor, causes the at least one processor to implement the network element management method of any of claims 1 to 10.

15. A computer-readable medium, storing a computer program thereon, the computer program, when executed by a processor, causes the processor to implement the network element management method of any one of claims 1 to 10.
